# EUROPEAN PATENT APPLICATION

(11) **EP 2 757 403 A1**
(43) Date of publication of application: **23.07.2014**
(21) Application number: 13196953.7
(22) Date of filing: 12.12.2013
(51) Int. Cl.: G02B 26/08

(54) **Vibrating mirror device and electronic device having a projector function**

(30) Priority: 16.01.2013 JP 2013005665
(71) Applicant: Funai Electric Co., Ltd., Daito-shi Osaka 574-0013 (JP)
(72) Inventor: Murayama, Manabu, Osaka Osaka 574-0013 (JP); Kugo, Kouichi, Osaka Osaka 574-0013 (JP); Inoue, Naoki, Osaka Osaka 574-0013 (JP)
(74) Representative: Osha Liang SARL

(57) **Abstract**

A vibrating mirror device (100) includes a mirror portion (1), a driving portion (10) including a detecting electrode (19) configured to detect an amount of deformation of a piezoelectric element (17) when driving the mirror portion (1) by applying a voltage to cause the piezoelectric element (17) to deform, an insulating layer (20) formed on a top face (17a) of the piezoelectric element (17), and a first lead interconnection (21) formed on the top face (20a) of the insulating layer (20), contacting the detecting electrode (19), and extending to a region (60a, 60b) outside of the driving portion (10).

## Description

### [Field of Technology]

The present invention relates generally to a vibrating mirror device and an electronic device having a projector function, e.g., a vibrating element and an electronic device having a projector function that is provided with a driving portion that includes a detecting electrode for detecting an amount of deformation in a piezoelectric element (e.g., crystal).

### [Background Art]

Conventional vibrating mirror devices are provided with driving portions that include detecting electrodes for detecting an amount of deformation of a piezoelectric crystal (referencing, for example, Patent Citation 1).

Patent Citation 1 discloses a single-axis optical scanner (vibrating mirror device) comprising an essentially circular mirror portion and a cantilever (a bar that is held on one end) elastic portion wherein the free end is connected to the mirror portion and the stationary end is connected to a stationary frame. In the optical scanner set forth in Patent Citation 1, a piezoelectric crystal is formed in a state where it is held between a top electrode and a bottom electrode in a specific location of the elastic portion. The structure is such that a single piezoelectric crystal is provided with two sets of top electrodes and bottom electrodes, where the piezoelectric crystal is driven by applying a voltage between the top electrode and the bottom electrode on one side, and the potential difference between the electrodes accompanying deformation of the piezoelectric crystal is detected using the top electrode and the bottom electrode on the other side. Moreover, the structure is such that the top electrodes and bottom electrodes extend from the elastic portion to a stationary frame at some distance, where the external interconnections for the power supply and the interconnections from a displacement detecting circuit are respectively wire-bonded to the top electrodes and the bottom electrodes at a part of the stationary frame.

### [Patent Citations]

[Patent Document 1] Japanese Unexamined Patent Application Publication 2009-163154

In the optical scanner set forth in Patent Citation 1, the structure is intended to cause a mirror portion to reciprocate around a single axis, thus making it possible to connect the interconnections from the dislocation detecting circuit and the like to the top electrode and the bottom electrode at the stationary frame part. On the other hand, in the case of an optical scanner (a vibrating mirror device) wherein the mirror portion disposed in a center portion of the element reciprocates around two mutually perpendicular axes, with respect to the top electrode and the bottom electrode (the detecting electrodes) for detecting the amount of deformation (the potential difference) for the driving portion for the first axis, it is necessary for the detecting electrodes to lead out to a stationary frame that is to the outside of not only the driving portion for the first axis but also the driving portion for the second axis (the driving portion for the first axis causes the mirror portion to reciprocate around the first axis, and the driving portion for the second axis causes the mirror portion to reciprocate around the second axis). In this case, the interconnections for leading out from the detecting electrodes are formed in the same layer as the detecting electrodes for the piezoelectric crystal, through patterning or the like, to lead out to the outside.

However, when not only the detecting electrodes but also the parts for the top and bottom lead interconnections face each other with the piezoelectric crystal (a dielectric body) held therebetween, the surface charge charged at the part where the detecting electrode accompanying deformation of the piezoelectric crystal is affected by the piezoelectric crystal so as to discharge (diffuse) into the lead interconnections. Because of this, even if a surface charge is produced in the detecting electrode in an amount in accordance with the deformation of the piezoelectric crystal, a voltage value (a potential difference) will be detected by the detecting electrode in a state wherein a voltage drop was caused by the surface charge discharging into the lead interconnections. Moreover, because the detecting electrode will actually detect a voltage value smaller than the voltage value of that should be detected, accurate detection of the amount of deformation of the piezoelectric crystal is difficult.

### [Summary of the Invention]

One or more embodiments of the present invention provide a vibrating mirror device able to suppress deformation of the mirror portion, and an electronic device having a projector function, provided with the vibrating mirror device.

Further, one or more embodiments of the present invention provide a vibrating mirror device and an electronic device having a projector function so as to prevent a voltage value from being detected by the detecting electrodes in a state wherein there has been a voltage drop caused by the discharge of the surface charge.

According to one or more embodiments, a vibrating mirror device may comprise a mirror portion, a driving portion including a detecting electrode configured to detect an amount of deformation of a piezoelectric element when driving the mirror portion by applying a voltage to cause the piezoelectric element to deform, an insulating layer, and a first lead interconnection. According to one or more embodiments, the mirror portion may comprise a mirror. According to one or more embodiments, the driving portion may comprise a driving circuit. According to one or more embodiments, the insulating layer may be formed on a top face of the piezoelectric element. According to one or more embodiments, the first lead interconnection is formed on the top face of the insulating layer. According to one or more embodiments, the first lead interconnection is configured to contact the detecting electrode. According to one or more embodiments, the first lead interconnection extends to a region outside of the driving portion.

According to one or more embodiments of the present invention, the insulating layer (which may be formed on the top face of the piezoelectric element) and the first lead interconnection (which may be formed on the top face of the insulating layer, may be connected to the detecting electrode, and may extend to a region outside of the driving portion) of the vibrating mirror device make it possible to lead out, to a region on the outside of the driving portion, the first lead interconnection connected to the detecting electrode along the top face of the insulating layer (which may be separated from the piezoelectric element, e.g., crystal) without contacting the top face of the piezoelectric element on which the detecting electrode is formed. As a result, the amount of deformation of the piezoelectric element (the voltage value produced through the piezoelectric effect) may be detected through the detecting electrode in a state wherein only the detecting electrode portion is in contact with the top face of the piezoelectric element, regardless of the length of the first lead interconnection. At this time, the first lead interconnection may be separated from the piezoelectric element by the insulating layer, so as to prevent the discharge (diffusion) of the surface charge produced at the part at the detecting electrode into the first lead interconnection, affected by the piezoelectric element disposed on the bottom layer side of the first lead interconnection as well. As a result, in one or more embodiments, it is possible to prevent detection, by the detecting electrode, of a voltage value in a state wherein there has been a voltage drop caused by the discharge of the surface charge. Moreover, in one or more embodiments, because the voltage value detected at the detecting electrode part may be detected in a state wherein there is no voltage drop, it is possible to detect with good accuracy the amount of deformation of the piezoelectric element (the driving portion).

According to one or more embodiments, the insulating layer may be formed so as to cover the detecting electrode on the top face of the piezoelectric element. According to one or more embodiments, the first lead interconnection may be connected to the detecting electrode through a hole portion that passes through the insulating layer, in a thickness direction, at a part that corresponds to the detecting electrode. Structuring in this way may enable easy connection of the first lead interconnection, which may be formed on the top face of the insulating layer and may extend along the top face of the insulating layer, to a detecting electrode positioned on a layer below the insulating layer through a hole portion that passes through the insulating layer in the direction of thickness.

According to one or more embodiments, the driving portion may be structured so as to undergo flexural deformation when driven. According to one or more embodiments, the insulating layer may be made from a resin capable of undergoing flexural deformation. With such a structure, the insulating layer formed from a resin that can undergo flexural deformation may be formed on the top face of the piezoelectric element, making it possible to prevent the insulating layer from resisting the deformation of the driving portion even when a driving portion that includes a piezoelectric element undergoes bending deformation (flexural deformation).

According to one or more embodiments, the driving portion may further include a driving electrode, which may be formed so as to contact the top face of the piezoelectric element, for applying a voltage to cause the piezoelectric element to undergo flexural deformation to drive the mirror portion. According to one or more embodiments, the vibrating mirror device may further include a second lead interconnection. The second lead interconnection may be formed on the top face of the insulating layer, may be connected to the driving electrode of the driving portion, and may extend to a region outside of the driving portion. With such a structure, the second lead interconnection connected to the driving electrode can also lead out, to a region outside of the driving portion, by extending over the top face of the insulating layer, separated from the piezoelectric element, without contacting the top face of the piezoelectric element whereon the driving electrode is formed. That is, in addition to the first lead interconnection, a second lead interconnection may lead out similarly to an outer region that is further than the driving portion, so as to eliminate the need to perform wire bonding of the lead lines (outer interconnections) at a location in the vicinity of the driving portion. Consequently, this makes it possible, for example, to avoid reliably damage to the driving portion that is caused by the wire bonding.

According to one or more embodiments, the insulating layer may be formed so as to cover a region of a portion that includes the detecting electrode on the top face of the piezoelectric element. With this structure, the insulating layer may be formed on only that part of the entire surface (top face) of the piezoelectric element whereon the detecting electrode is formed, so that, to that extent, the stress of the insulating layer does not greatly affect the flexural deformation of the piezoelectric element. This makes it possible, for example, to prevent effectively reduction in the deformation force of the piezoelectric element that would be caused by stress in the insulating layer.

According to one or more embodiments, the detecting electrode may have a long thin shape that extends in a first direction. According to one or more embodiments, an interconnection length of the first lead interconnection may be greater than a length of the lengthwise direction of the detecting electrode. In this way, even in a case of detecting the amount of deformation of the piezoelectric element (the voltage value produced through the piezoelectric effect) through the first lead interconnection that leads out across an interconnection distance greater (longer) than the length of the lengthwise direction of the detecting electrode from the detecting electrode, the first lead interconnection may extend along the top face of the insulating layer, which is separated from the piezoelectric element, thus making it possible to prevent the discharge of the surface charge (produced at that part of the detecting electrode) to the first lead interconnection, which has a long interconnection length (a large interconnection surface area). As a result, for example, even when a first lead interconnection that has a long interconnection length is used, not only is it possible to detect the voltage value detected by the detecting electrode part, in a state wherein no extreme voltage drop occurs, but it is also possible to detect, with good accuracy, the amount of deformation of the piezoelectric element (the driving portion).

According to one or more embodiments, the driving portion may include a first driving portion for causing the mirror portion to reciprocate around a first axis, and a second driving portion for causing the mirror portion to reciprocate around a second axis that is substantially perpendicular to the first axis. According to one or more embodiments, the insulating layer may be formed on the top face of the piezoelectric element across the first driving portion and the second driving portion. According to one or more embodiments, the first lead interconnection may lead out from the detecting electrode of the first driving portion and is routed sequentially over a top face of the insulating layer corresponding to the first driving portion and a top face of the insulating layer corresponding to the second driving portion, so as to lead out to a region outside of the second driving portion. With this structure, even when the first lead interconnection leads out to an outer region across a second driving portion, an insulating layer may be interposed between the first lead interconnection and the piezoelectric element of the second driving portion as well, in the same manner as with the first driving portion part, thus making it possible to prevent the discharge (diffusion) of the surface charge that is produced at the detecting electrode part of the first driving portion into the first lead interconnection, affected by the piezoelectric element of the second driving portion. As a result, for example, even in a vibrating mirror device wherein a mirror portion is caused to reciprocate around two axes (a first axis and a second axis) by a first driving portion and a second driving portion, it is possible to prevent effectively the detection, by the detecting electrode, of a voltage value in a state wherein a voltage drop has occurred due to discharge of the surface charge.

According to one or more embodiments, an electronic device having a projector function may comprise: a laser beam producing portion configured to produce a laser beam; a controlling portion configured to analyze an inputted video to recognize pixel information; and a vibrating mirror device configured to scan the laser beam. According to one or more embodiments, the vibrating mirror device may be as described in any of the above-mentioned embodiments. For example, the vibrating mirror device may include: a mirror portion; a driving portion including a detecting electrode configured to detect an amount of deformation of a piezoelectric element when driving the mirror portion by applying a voltage to cause the piezoelectric element to deform; an insulating layer formed on a top face of the piezoelectric element; and a lead interconnection formed on the top face of the insulating layer and extending to a region outside of the driving portion, the first lead interconnection being configured to contact the detecting electrode of the driving portion.

According to one or more embodiments of the present invention, the electronic device having the projector function may comprise a vibrating mirror device which may include an insulating layer formed on the top face of the piezoelectric element and the first lead interconnection (which may be formed on the top face of the insulating layer, connected to the detecting electrode, and extend to a region that is outside of the driving portion), which makes it possible to lead out, to a region on the outside of the driving portion, the lead interconnection connected to the detecting electrode along the top face of the insulating layer (which may be separated from the piezoelectric element) without contacting the top face of the piezoelectric element on which the detecting electrode is formed. As a result, for example, the amount of deformation of the piezoelectric element (the voltage value that is produced through the piezoelectric effect) may be detected through the detecting electrode in a state wherein only the detecting electrode portion is in contact with the top face of the piezoelectric element, regardless of the length of the lead interconnection. At this time, the lead interconnection may be separated from the piezoelectric element by the insulating layer so as to prevent the discharge (diffusion) of the surface charge produced at the part at the detecting electrode into the lead interconnection, affected by the piezoelectric element disposed on the bottom layer side of the lead interconnection as well. As a result, for example, in the vibrating mirror device, it is possible to prevent the detection, by the detecting electrode, of a voltage value in a state wherein there has been a voltage drop caused by the discharge of the surface charge. Moreover, because the voltage value detected at the detecting electrode part is detected in a state wherein there is no voltage drop, it is possible to detect with good accuracy the amount of deformation of the piezoelectric element (the driving portion). Consequently, the driving of the vibrating mirror device may be controlled in a state wherein the amount of deformation of the piezoelectric element is detected accurately, so that in the electronic device with the projector function, the laser beam can project an image in a state wherein the scanning is accurate.

As described above, one or more embodiments of the present invention make it possible to prevent the detection, by the detecting electrode, of a voltage value in a state wherein there has been a voltage drop caused by the discharge of the surface charge.

### [Brief Descriptions of the Drawings]

FIG. 1 is a top view of the overall structure of a vibrating mirror device according to one or more embodiments of the present invention. FIG. 2 is a top view wherein part of the horizontal driving portion in the vibrating mirror device illustrated in FIG. 1 has been enlarged.
FIG. 3 is a top view of a state wherein the lead interconnection and the insulating layer have been removed in the horizontal driving portion illustrated in FIG. 2.
FIG. 4 is a top view of the structure of the horizontal driving portion in a state wherein an insulating layer that has a through hole has been formed on the structure illustrated in FIG. 3.
FIG. 5 is a cross-section along the section 500-500 in FIG. 2.
FIG. 6 is a cross-section along the section 510-510 in FIG. 2.
FIG. 7 is a block diagram for a portable projector that includes a vibrating mirror device according to one or more embodiments of the present invention.

### [Detailed Description of Embodiments of the Invention]

One or more embodiments of the present invention will be explained below based on the drawings.

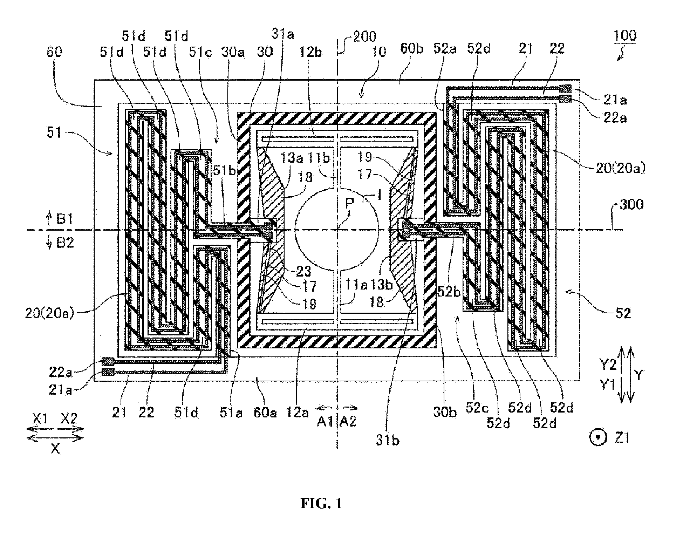

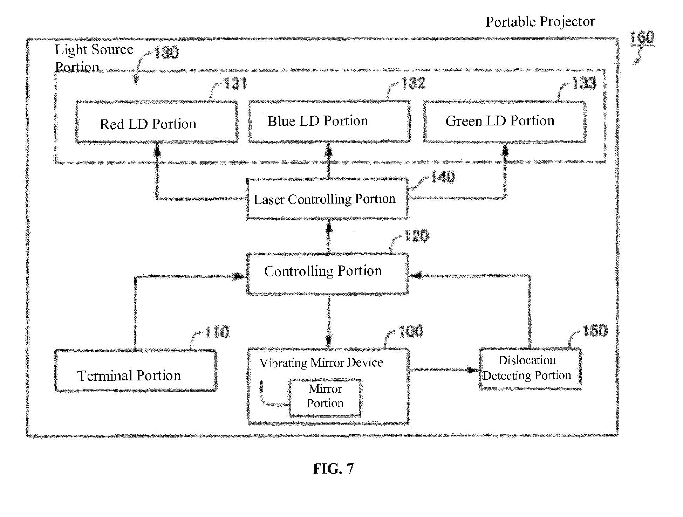

Structures for a vibrating mirror device 100 and a portable projector 160 according to one or more embodiments of the present invention will be explained first in reference to FIG. 1 through FIG. 7. In the below the structure of the vibrating mirror device 100 (referencing FIG. 1) will be explained first, and then an example of a structure of a portable projector 160 (referencing FIG. 7) comprising the vibrating mirror device 100 will be explained. The portable projection 160 is an example of an "electronic device having a projector function" according to one or more embodiments of the present invention.

As illustrated in FIG. 1, the vibrating mirror device 100 according to according to one or more embodiments of the present invention may comprise: a mirror portion 1, which may have an external shape formed in essentially a circular shape, for reflecting light; a horizontal driving unit 10 for causing the mirror portion 1 to reciprocate around an axis 200 (the Y axis); and a pair of vertical driving units 51 and 52 for causing the entirety of the horizontal driving unit 10, including the mirror portion 1, to reciprocate around an axis 300 (the X axis). Here the horizontal driving unit 10 has the role of scanning the light that is reflected by the mirror portion 1 in the sideways direction (the horizontal direction) of a display region such as a screen, or the like, not shown. Moreover, the vertical driving units 51 and 52 may have the role of sequentially moving, in the vertical direction, with each scan in the horizontal direction, the reflected light that is scanned in the horizontal direction. The horizontal driving unit 10 is an example of a "first driving portion" according to one or more embodiments of the present invention, and the vertical driving units 51 and 52 are an example of a "second driving portion" according to one or more embodiments of the present invention. Moreover, the axis 200 and the axis 300 are, respectively, examples of a "first axis" and a "second axis" according to one or more embodiments of the present invention.

Moreover, the vibrating mirror device 100 may further comprise a supporting portion 30 for supporting the entirety of the horizontal driving unit 10 so as to enable reciprocation. The vibrating mirror device 100 may also comprise a supporting portion 60 for supporting the vertical driving units 51 and 52 so as to enable reciprocation in the X-Y plane. Moreover, the horizontal driving unit 10 that includes the mirror portion 1, and the vertical driving units 51 and 52 may be formed having integrated structures from a base portion 15 made, for example, from Si (e.g., a Si substrate), as described below.

Moreover, as illustrated in FIG. 1, the supporting portion 30 may have a frame shape that surrounds the outer peripheral portion of the horizontal driving unit 10 on four edges. Additionally, in the supporting portion 30, an edge portion 30a on one side (the X1 side) along the axis 300 may be connected to the vertical driving unit 51, and an edge portion 30b on the other side (the X2 side) may be connected to the vertical driving unit 52. Moreover, the horizontal driving unit 10 disposed on the inside of the supporting portion 30 may be connected to the edge portions 30a and 30b of the supporting portion 30 through connecting portions 31a and 31b, described below, that are formed on the axis 300.

Moreover, the supporting portion 60 may have a frame shape that surrounds, on four edges, the outer peripheral portion of a region wherein the vertical driving unit 51, the supporting portion 30 (the horizontal driving unit 10), and the vertical driving unit 52 may be disposed in that order from the X1 side toward the X2 side along the axis 300. Additionally, an end portion 51a of the vertical driving unit 51 may be connected to an edge portion 60a on one side (the Y1 side) of the supporting portion 60 along the axis 200, and an end portion 52a of the vertical driving unit 52 may be connected to an edge portion 60b on the other side (the Y2 side) of the supporting portion 60 along the axis 200.

As a result, the vibrating mirror device 100 may be structured so that the horizontal driving unit 10 is driven (reciprocated) by a specific driving pattern, and the vertical driving units 51 and 52 are driven by a specific pattern to tilt the mirror portion 1 freely in relation to the X-Y plane, centered on the center point P. Given this, the structure may be such that the reflected light emitted from a light source portion 130 (referencing FIG. 7) and reflected by the mirror portion 1 is scanned in two axial directions (the X axial direction and the Y axial direction) by the tilt of the mirror portion 1. Piezoelectric elements, e.g., crystals 17, which may be made from lead zirconium titanate (PZT) and a dielectric (a ferroelectric), are built into the horizontal driving unit 10, the vertical driving unit 51, and the vertical driving unit 52, where the piezoelectric crystals 17 of the individual driving portions may undergo bending deformation, and the tilt of the mirror portion 1 relative to the X-Y plane may be controlled, through application, to the piezoelectric crystal 17, of a voltage controlled to a specific pattern.

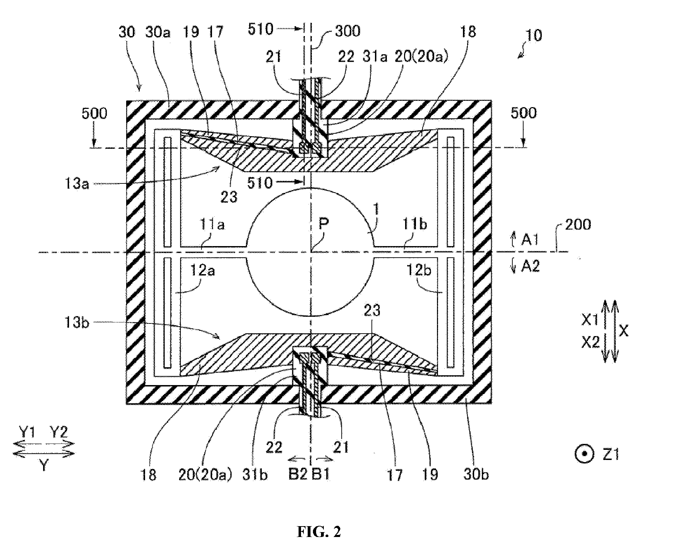

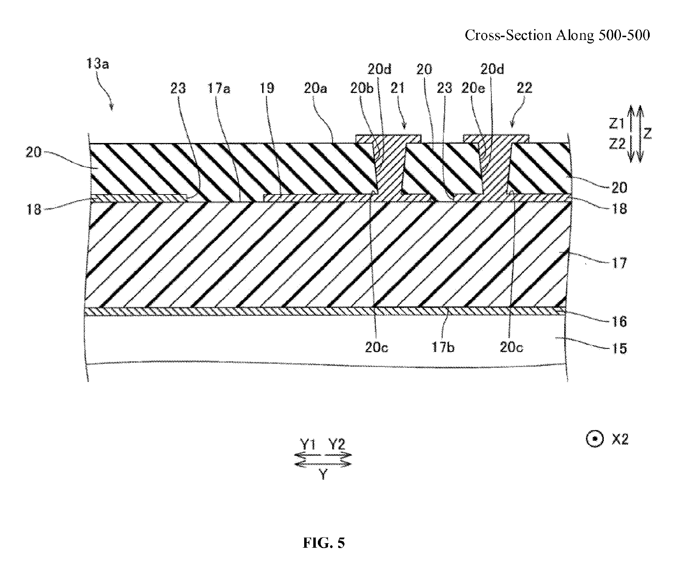

Moreover, as illustrated in FIG. 2, the horizontal driving unit 10 may include: torsion bars 11a and 11b that connect to the mirror portion 1 on the axis 200 (the Y axis) so as to enable reciprocation; a parallel bar 12a (on the Y1 side) and a parallel bar 12b (on the Y2 side) that can undergo flexural deformation and are connected to each of the torsion bars 11a and 11b; and driving portions 13a and 13b that are connected respectively to both end portions (on the X1 side and the X2 side) of the parallel bars 12a and 12b. Here the driving portion 13a and the driving portion 13b have essentially symmetrical shapes and structures, with the axis 200 as the line of symmetry. Moreover, the driving portions 13a and 13b may be structured so as to each undergo flexural deformation through the application of a voltage to a piezoelectric crystal 17 (referencing FIG. 5). As illustrated in FIG. 5, the piezoelectric crystal 17 may be a piezoelectric element that is polarized in the direction of film thickness (the Z direction), where the top surface 17a side or the bottom face 17b side undergoes deformation through expanding or contracting in the Y direction that, depending on the polarity, when a voltage is applied. That is, the piezoelectric crystal 17 may have the property of the top face 17a side contracting relative to the bottom face 17b side, or, conversely, the bottom face 17b side contracting relative to the top face 17a side, through controlling the polarity (positive or negative) of the voltage that is applied to the piezoelectric crystal 17. The driving portions 13a and 13b are an example of a "first driving portion" according to one or more embodiments of the present invention.

Consequently, the structure may be such that when respective voltages are applied to the piezoelectric crystal 17 of the driving portion 13a and the piezoelectric crystal 17 of the driving portion 13b to drive (deform) the driving portions 13a and 13b with a specific pattern, the dislocation thereof is transmitted to the parallel bars 12a and 12b linked to the driving portions 13a and 13b, further causing the torsion bars 11a and 11b to undergo flexural deformation around the axis 200, to thereby cause the mirror portion 1 to reciprocate in the A1 direction and the A2 direction, relative to the supporting portion 30, with the axis 200 as the rotational axis. At this time, the mirror portion 1 may reciprocate while tilting in the A1 direction and the A2 direction with tilt angles that are greater than the tilt angles of the parallel bars 12a and 12b, due to a resonant effect. Moreover, the driving portion 13a may be connected to the edge portion 30a (on the X1 side) of the supporting portion 30 through a connecting portion 31a, which is the stationary end, on the axis 300, and the driving portion 13b may be connected to the edge portion 30b (on the X2 side) of the supporting portion 30 through a connecting portion 31b, which is the stationary end, on the axis 300.

Moreover, as illustrated in FIG. 1, the vertical driving unit 51 disposed on the X1 side of the horizontal driving unit 10 may include a driving portion 51c wherein the end portion 51a that is a stationary end is connected to an edge portion 60a (on the Y1 side) of the supporting portion 60, and an end portion 51b is connected to the connecting portion 31a of the supporting portion 30. Moreover, the driving portion 51c may have a structure that has five deforming portions 51d that each extend in straight line shapes in the Y direction, where the individual deforming portions 51d are connected together at end portion regions (on the Y1 side or the Y2 side) in the lengthwise direction. Consequently, the driving portion 51c, as a whole, may extend in a serpentine pattern on the X-Y plane in the Y direction in a state wherein the five deforming portions 51d are connected sequentially, with the end portion 51a connected to the edge portion 60a of the supporting portion 60 as the starting point, and the end portion 51b may be connected to the connecting portion 31a of the supporting portion 30. Although not illustrated, piezoelectric crystals 17 may be provided in each individual deforming portion 51d. As a result, in the driving portion 51c (the vertical driving unit 51), the structure may be such that the five deforming portions 51d are deformed (driven) independently of each other through the application, to the individual piezoelectric crystals 17, of the voltages that are controlled in a specific pattern. The driving portion 51c is an example of a "second driving portion" according to one or more embodiments of the present invention.

Moreover, the vertical driving unit 52 disposed on the X2 side of the horizontal driving unit 10 may include a driving portion 52c wherein the end portion 52a which may be a stationary end may be connected to an edge portion 60b of the supporting portion 60, and an end portion 52b may be connected to the connecting portion 31b of the supporting portion 30. This driving portion 52c may also have the same structure as the driving portion 51c. That is, regarding the driving portion 52c, the five deforming portions 52d may be sequentially connected and have a serpentine pattern along the Y direction in the X-Y plane. Moreover, in the driving portion 52c (the vertical driving unit 52), the structure may be such that the five deforming portions 52d are deformed (driven) independently of each other through the application, to the individual piezoelectric crystals 17, of the voltages that are controlled in a specific pattern. The driving portion 52c is an example of a "second driving portion" according to one or more embodiments of the present invention.

Moreover, as illustrated in FIG. 1, the vertical driving unit 51 and the vertical driving unit 52 may have essentially point-symmetrical shapes centered on the center point P of the mirror portion 1. That that is, there may be a relationship wherein rotating the driving portion 51c of the vertical driving unit 51 180° around the center R of the mirror portion 1 would cause it essentially to overlap the driving portion 52c of the vertical driving unit 52.

The driving portions 51c and 52c may be structured so as to each individually undergo flexural deformation through the application of voltages to the individual piezoelectric crystals 17 (referencing FIG. 5). As a result, when the driving portions 51c and 52c are driven (deformed) in a specific pattern, the dislocation thereof may be transmitted to the supporting portion 30, causing the supporting portion 30 to reciprocate around the axis 300. As a result, the structure may be such that the mirror portion 1 reciprocates in the B1 and B2 directions, relative to the supporting portion 60 (the X-Y plane), with the axis 300 as the rotational axis.

The horizontal driving unit 10 may be driven at a predetermined frequency, for example of about 30 kHz, and may be structured so as to cause the mirror portion 1 and the torsion bars 11a and 11b to resonate. On the other hand, the vertical driving portion 50 may be driven at a predetermined frequency, for example of about 60 Hz, and may be structured so that the mirror portion 1 and the torsion bars 11a and 11b do not resonate. Moreover, the supporting portion 60 may be structured so as to not deform, even when voltages are applied to the driving portions 51c and 52c.

A detailed structure in accordance with one or more embodiments for a driving portion wherein a piezoelectric crystal 17 is incorporated will be explained next. The horizontal driving unit 10 will be used as an example in the below, and the cross-sectional structure of the driving portion 13a (13b) will be explained.

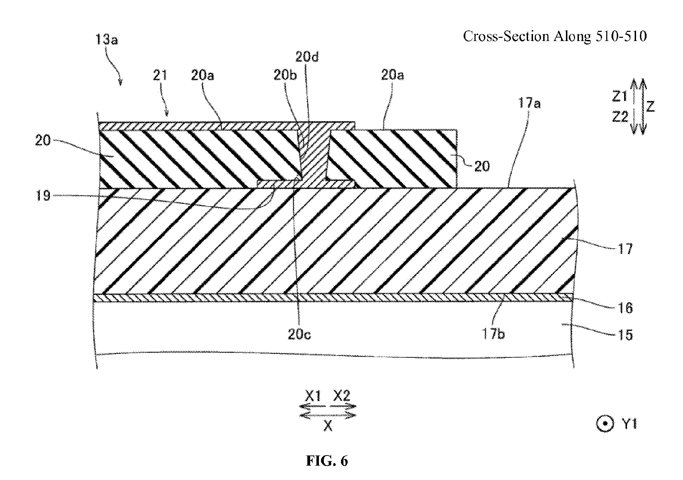

Specifically, as illustrated in FIG. 5 and FIG. 6, the driving portion 13a on one side in the horizontal driving unit 10 may include: a base portion 15; a bottom electrode 16 formed on the top face (the Z1 side) of the base portion 15; a piezoelectric crystal 17 formed on top (the Z1 side) of the top face of the bottom electrode 16, a driving electrode 18 (referencing FIG. 5) formed on top (the Z1 side) of a top face 17a of the piezoelectric crystal 17; and a detecting electrode 19 formed in a region other than that of the driving electrode 18, on top (the Z1 side) of the top face 17a. Here the base portion 15 may be made, for example, from a Si substrate and may have a predetermined thickness (in the Z direction), for example between about 10 µm and 100 µm. Moreover, the bottom electrode 16 may be made, for example, from Pt or a Cr-Au alloy and may have a predetermined thickness (in the Z direction), for example of between about 0.01 µm and about 0.5 µm. The piezoelectric crystal 17 made from PZT may have a predetermined thickness (in the Z direction), for example between about 1 µm and about 5 µm. Furthermore, the driving electrode 18 and the detecting electrode 19 may be made, for example, from Pt or a Cr-Au alloy, and may have predetermined thicknesses (in the Z direction), for example of between about 0.01 µm and about 0.5 µm.

Moreover, the driving electrode 18 (referencing FIG. 5) may be formed so as to contact the top face 17a of the piezoelectric crystal 17, provided so as to cause the piezoelectric crystal 17 to deform to the application of a voltage between itself and the bottom electrode 16. On the other hand, the detecting electrode 19 (referencing FIG. 6) may be structured so as to contact the top face 17a of the piezoelectric crystal 17, and provided in order to detect the potential difference (a voltage) between itself and the bottom electrode 16 accompanying the deformation of the piezoelectric crystal 17 when the mirror portion 1 is driven.

Here, as illustrated in FIG. 5, an insulating layer 20 may be formed on top of the top face 17a of the piezoelectric crystal 17 in the driving portion 13a. Explaining in detail, the insulating layer 20 may be made, for example, from a polyimide resin, or from any other resin which can undergo flexural deformation and has a relatively low dielectric constant. Moreover, the insulating layer 20 may have a predetermined thickness, for example between about 1 µm and about 30 µm, and may be formed through coating onto the top of the top face 17a of the piezoelectric crystal 17, for example through spin coating. Moreover, the insulating layer 20 may be formed so as to cover the top face 17a of the piezoelectric crystal 17 wherein the driving electrode 18 and the detecting electrode 19 are not formed, and to cover the top faces of the driving electrode 18 and the detecting electrode 19. Moreover, in the driving portion 13a, a lead interconnection 21 may be formed and disposed on top of the top face 20a of the insulating layer 20, connecting to the detecting electrode 19. The lead interconnection 21 may be made, for example, from Pt or a Cr-Au alloy, in the same manner as the detecting electrode 19, and may have a predetermined thickness, for example of between about 0.01 µm and about 0.5 µm. The lead interconnection 21 is an example of a "first lead interconnection" according to one or more embodiments of the present invention.

Moreover, according to one or more embodiments of the present invention, the insulating layer 20 may be formed so as to cover the detecting electrode 19 on the top of the top face 17a of the piezoelectric crystal 17, and the lead interconnection 21 may be connected to the detecting electrode 19 through a through hole 20b that passes through the insulating layer 20, in the direction of thickness, at a part that corresponds to the detecting electrode 19. This through hole 20b may be formed, for example, using photolithography on the insulating layer 20, which is formed coating the top of the top face 17a of the piezoelectric crystal 17, in the part that covers the detecting electrode 19. Moreover, the through hole 20b may have an inside surface 20d with a tapered shape so that the opening area (the opening diameter) at the interfacial portion 20c (the contact portion) with the detecting electrode 19 is smaller than the opening area (the opening diameter) on the top face 20a side. This is because the inside surface 20d may be formed with a smooth slope (inclined) shape as a result of the opening at the top face 20a side being wider than the opening at the interfacial portion 20c side due to the slight contraction of the insulating layer 20 at the top face 20a side in curing (baking) after the through hole 20b is formed through exposure. Moreover, for the lead interconnection 21, an interconnection pattern may be formed for example using sputtering, or the like, on the insulating layer 20. At this time, the metal material may be deposited in the through hole 20b, to connect the lead interconnection 21 to the detecting electrode 19. The through hole 20b is an example of a "hole portion" according to one or more embodiments of the present invention.

Moreover, according to one or more embodiments of the present invention, as illustrated in FIG. 5, a lead interconnection 22 that is disposed on top of the top face 20a of the insulating layer 20 and that connects to the driving electrode 18 through a through hole 20b may be formed in the driving portion 13a separately from the lead interconnection 21. Moreover, the lead interconnection 22 may be made, for example, from Pt or a Cr-Au alloy, in the same manner as the driving electrode 18, and may have a predetermined thickness, for example of between about 0.01 µm and about 0.5 µm. The lead interconnection 22 is an example of a "second lead interconnection" according to one or more embodiments of the present invention.

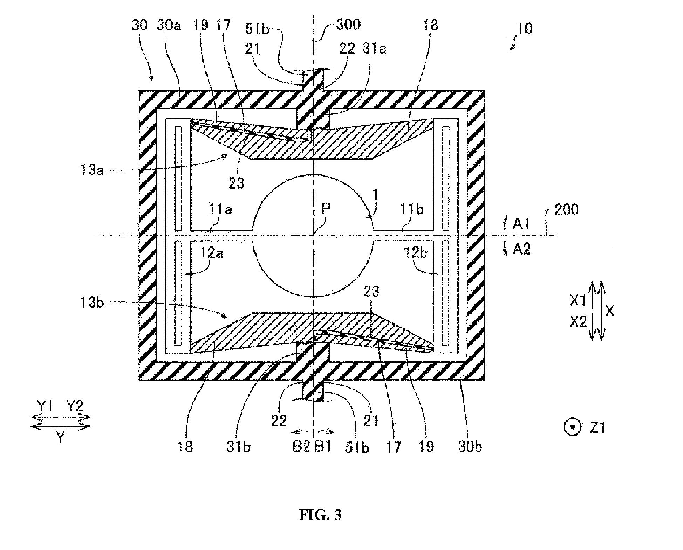

Here when the layered structure of the driving portion 13a (referencing FIG. 2) is viewed in the plan view, first, as illustrated in FIG. 3, the driving electrode 18 may be formed so as to cover most parts of the planar face shape (the shape of the top face 17a) of the piezoelectric crystal 17, for example more than 50% or 60% or 70% or 80% or 90% thereof. Following this, the detecting electrode 19, having for example a long thin shape, may be formed on the top face 17a of the piezoelectric crystal 17 wherein the driving electrode 18 is not formed, with a gap portion 23, which has a portion that may be bent, therebetween. In FIG. 3 the piezoelectric crystal 17 may be exposed only in the gap portion 23. Moreover, on the far side of the piezoelectric crystal 17 (the side toward the back of the paper) a bottom electrode 16 (referencing FIG. 5), formed so as to have the same planar shape as the planar shape of the piezoelectric crystal 17, and a base portion 15 (referencing FIG. 5), may be formed in that order.

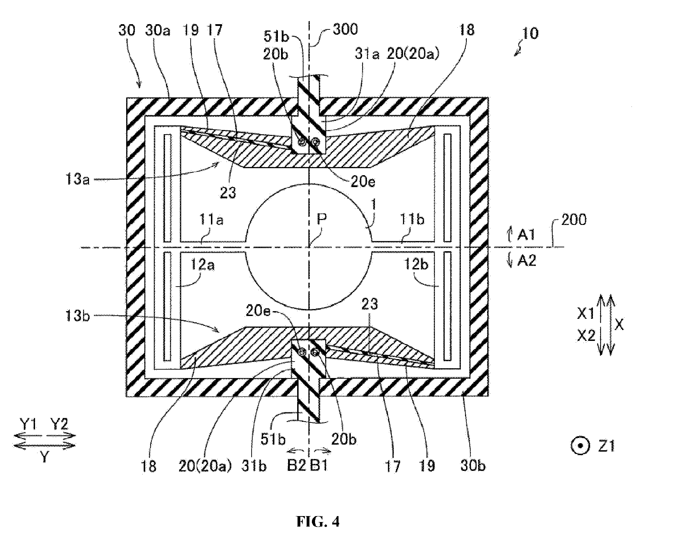

Moreover, as illustrated in FIG. 4, the insulating layer 20 may be formed so as to cover a specific region of the driving portion 13a. According to one or more embodiments, the insulating layer 20 may be formed so as to cover a region of the top face 17a of the piezoelectric crystal 17 that is the part wherein the detecting electrode 19 is formed, and so as to cover a region of the top face 17a of the piezoelectric crystal 17 that is the part where in the driving electrode 18 is formed, and extend to the end portion 51b of the vertical driving unit 51 (the driving portion 51c), cutting across the edge portion 30a (on the X1 side) of the supporting portion 30 on the outside of the driving portion 13a from the connecting portion 31a (on the X1 side) formed on the axis 300. While in FIG. 4 only the structure up to the end portion 51b of the driving portion 51c is illustrated, the insulating layer 20, as illustrated in FIG. 1, may be formed extending sequentially to the region wherein the end portion 51a of the driving portion 51c and the edge portion 60a of the supporting portion 60 connect, through the five deforming portions 51d (on the front side of the paper) from the end portion 51b of the driving portion 51c.

Moreover, the through hole 20b, described above, may be formed in the insulating layer 20 passing through the insulating layer 20 in the direction of thickness at the part that corresponds to the detecting electrode 19, and the through hole 20e (referencing FIG. 5) may be formed passing through the insulating layer 20 in the direction of thickness at the part corresponding to the driving electrode 18. Here the through hole 20e that is adjacent to the through hole 20b, on the Y2 side, may be formed in the same manner as the through hole 20b. Consequently, as illustrated in FIG. 4, the top face of the driving electrode 18 may be exposed on the inside of the through hole 20b, and the top face of the detecting electrode 19 may be exposed on the inside of the through hole 20e. Moreover, as illustrated in FIG. 2, the lead interconnection 21, described above, may connect to the detecting electrode 19 through the through hole 20b, and the lead interconnection 22 may connect to the driving electrode 18 through the through hole 20e.

Moreover, as illustrated in FIG. 1, the lead interconnection 21 may be connected to the detecting electrode 19 of the driving portion 13a and lead out from the detecting electrode 19 across the top face 20a of the insulating layer 20 formed on top of the top face of the driving portion 51c (the piezoelectric crystal 17) that may structure the vertical driving unit 51 (on the X1 side) to extend to the edge portion 60a of the supporting portion 60. That is, the lead interconnection 21 may be formed continuously from the driving portion 13a part through the connecting portion 31a, cutting across the edge portion 30a of the supporting portion 30, along the insulating layer 20, in a serpentine pattern, along with the driving portion 51c, to arrive at the edge portion 60a of the supporting portion 60. Consequently, the interconnection length (the total extension distance) of the lead interconnection 21 may be greater than the length of the lengthwise direction (the Y direction) of the detecting electrode 19. The edge portion 60a of the supporting portion 60 is an example of an "outer region" according to one or more embodiments of the present invention.

Moreover, the structure of the lead interconnection 22 may be the same as for the lead interconnection 21, where the lead interconnection 22 connects to the detecting electrode 19 of the driving portion 13a and leads out from the driving electrode 18 over the top of the top face 20a of the insulating layer 20 formed on the top face of the piezoelectric crystal 17 of the vertical driving unit 51, to extend to the edge portion 60a of the supporting portion 60. That is, the lead interconnection 22 may also be formed continuously from the driving portion 13a part through the connecting portion 31 a, cutting across the edge portion 30a of the supporting portion 30, along the insulating layer 20, in a serpentine pattern, along with the driving portion 51c, to arrive at the edge portion 60a of the supporting portion 60. Wire bonding portions 21a and 22a may be formed respectively in the lead interconnections 21 and 22. Moreover, the structure may be such that lead wires (electrical interconnections) for a dislocation detecting portion, not shown, can be connected to the wire bonding portions 21a and 22a.

While the cross-sectional structure of the driving portion 13a was explained above, the driving portion 13b (referencing FIG. 2) that may structure the horizontal driving unit 10 may also be the same as the driving portion 13a. Consequently, the vibrating mirror device 100 may have a structure such that, after the lead interconnections 21 and 22 lead out from the respective driving portions 13a and 13b, progressing in parallel on the top face 20a of the insulating layer 20, the lead interconnections 21 and 22 extend along the top face 20a of the insulating layer 20 over the vertical driving units 51 and 52, respectively, to the edge portions 60a and 60b of the supporting portion 60. The edge portion 60b of the supporting portion 60 is an example of an "outer region" according to one or more embodiments of the present invention.

Moreover, while illustrations are omitted for the detailed cross-sectional structures, the five deforming portions 51d that may structure the driving portion 51c (on the X1 side) of the vertical driving unit 51 and the five deforming portions 52d that may structure the driving portion 52c (on the X2 side) of the vertical driving unit 52, may be structured so as to have cross-sectional structures that are essentially identical to the cross-sectional structures of the driving portions 13a and 13b that structure the horizontal driving unit 10, as illustrated in FIG. 1. That is, in the deforming portion 51d, the bottom electrode 16 on the top face of the substrate 15, the piezoelectric crystal 17, the driving electrode 18, and the detecting electrode 19 may be formed having the layered structure illustrated in FIG. 5. Additionally, the lead interconnections (not shown) from the driving electrodes 18 for the deforming portions 51d and from the detecting electrode 19 may be formed on top of the top face 17a of the piezoelectric crystal 17 with the insulating layer 20 interposed therebetween. In the vibrating mirror device 100, all of the deforming portions 51d and 52d may have such a cross-sectional structure, and the lead interconnections from the driving electrode 18 and the detecting electrode 19 may be structured so as to pass over the top face 20a of the insulating layer 20, to extend to the supporting portion 60.

Moreover, according to the present embodiment, the vibrating mirror device 100 may be structured so as to be incorporated into a portable projector 160. Specifically, as illustrated in FIG. 7, the portable projector 160 may comprise: a vibrating mirror device 100 for scanning a laser beam; a controlling portion 120 for analyzing video inputted from the outside through a terminal portion 110 to recognize pixel information; a red LD (laser diode) portion 131 for emitting a red laser beam, a blue LD portion 132 for emitting a blue laser beam, and a green LD portion 133 for emitting a green laser beam, as a light source portion 130; a laser beam controlling portion 140 for controlling the gradations of the laser beams emitted by the red LD portion 131, the blue LD portion 132, and the green LD portion 133 based on pixel information recognized by the controlling portion 120; and a dislocation detecting portion 150 for detecting the dislocation of each individual driving portion in the vibrating mirror device 100 when driven. The red LD portion 131, the blue LD portion 132, and the green LD portion 133 are an example of a "laser beam producing portion" according to one or more embodiments of the present invention.

Consequently, when the portable projector 160 is operated, the operational control of the vibrating mirror device 100 (referencing FIG. 1) may be performed while the amounts of deformation of the piezoelectric crystals 17 in the individual driving portions (the driving portion 13a, the driving portion 13b, the driving portion 51c, and the driving portion 52c) are detected by the dislocation detecting portion 150 when the mirror portion 1 is reciprocated around two axes (the X axis and the Y axis), to scan, two-dimensionally, the laser beam from the portable projector 160 on a display region such as a screen, not shown. At this time, the lead interconnections from the individual driving portions (the lead interconnections 21 (referencing FIG. 1) in the driving portion 13a and the driving portion 13b) may be disposed along the top face 20a of the insulating layer 20, which is separated from the piezoelectric crystal 17, and thus the discharge (diffusion) into the lead interconnection 21 of the surface charge that is produced in the part at the detecting electrode 19 (referencing FIG. 5) may be greatly prevented. As a result, for example, the voltage value detected at the part of the detecting electrode 19 may be detected in the dislocation detecting portion 150 without a voltage drop, making it possible to reflect, into operational control of the vibrating mirror device 100, a state wherein the amounts of deformation of the piezoelectric crystal 17 of each of the individual driving portions (the driving portion 13a, the driving portion 13b, the driving portion 51c, and the driving portion 52c) are detected accurately.

As described above, according to one or more embodiments of the present invention, the insulating layer 20 formed on top of the top face 17a of the piezoelectric crystal 17 and the lead interconnection 21 formed on top of the top face 20a of the insulating layer 20, connected to the detecting electrode 19, and that extends to the region outside of the driving portions 13a and 13b (the edge portions 60a and 60b of the supporting portion 60) make it possible to lead out the lead interconnection 21, which may be connected to the detecting electrode 19, along the top face 20a of the insulating layer 20, which may be separated from the piezoelectric crystal 17, to a region on the outside of the driving portions 13a and 13b without contacting the top face 17a of the piezoelectric crystal 17 on which the detecting electrode 19 is formed. As a result, the amount of deformation of the piezoelectric crystal 17 (the voltage value produced through the piezoelectric effect) may be detected through the detecting electrode 19 in a state wherein only the detecting electrode 19 part is in contact with the top face 17a of the piezoelectric crystal 17, regardless of the length of the lead interconnection 21. At this time, the lead interconnection 21 may be separated from the piezoelectric crystal 17 by the insulating layer 20, making it possible to prevent the discharge (diffusion), into the lead interconnection 21, of the surface charge produced at the part of the detecting electrode 19, affected by also by the piezoelectric crystal 17 disposed on the bottom layer side (the Z2 side) of the lead interconnection 21. As a result, for example, it is possible to prevent the detection, by the detecting electrode 19, of a voltage value in a state wherein there has been a voltage drop caused by the discharge of the surface charge. Moreover, because the electrode value detected by the detecting electrode 19 part is in a state wherein there is no voltage drop, the amounts of deformation in the piezoelectric crystal 17 of the driving portion 13a and the piezoelectric crystal 17 of the driving portion 13b can be detected accurately.

Moreover, according to one or more embodiments of the present invention, the insulating layer 20 may be formed so as to cover the detecting electrode 19 on the top of the top face 17a of the piezoelectric crystal 17, and the lead interconnection 21 may be connected to the detecting electrode 19 through a through hole 20b that passes through the insulating layer 20, in the direction of thickness, at a part that corresponds to the detecting electrode 19. This makes it possible to connect easily a lead interconnection 21 formed through the through hole 20b provided in the insulating layer 20 and formed on top of the top surface 20a of the insulating layer 20, and that extends along the top face 20a, to the detecting electrode 19 positioned at a layer below the insulating layer 20.

Moreover, according to one or more embodiments of the present invention, the driving portions 13a and 13b may be structured so as to undergo flexural deformation during driving, and the insulating layer 20 may be formed from a resin that can undergo flexural deformation. As a result, the insulating layer 20 made from the resin that can undergo flexural deformation may be formed on top of the top faces 17a of the respective piezoelectric crystals 17 of the driving portions 13a and 13b, making it possible, for example, to prevent the insulating layer 20 from resisting the respective deformations of the driving portions 13a and 13b, even when the piezoelectric crystal 17 undergoes bending deformation (flexural deformation). Moreover, the use of a polyimide resin that has a relatively small dielectric constant for the resin makes it possible to control effectively the effect of the lead interconnection 21 on the surface charge of the piezoelectric crystal 17 that is at a layer below than that of the polyimide resin.

Moreover, according to one or more embodiments of the present invention, the driving portion 13a (13b) may be formed so as to contact the top face 17a of the piezoelectric crystal 17, and include a driving electrode 18 for applying a voltage to cause the piezoelectric crystal 17 to undergo flexural deformation, to drive the mirror portion 1. Additionally, the vibrating mirror device 100 may further comprise a lead interconnection 22 formed on top of the top face 20a of the insulating layer 20, connecting to the driving electrode 18 of the driving portion 13a (13b), and extending to the outer region (the edge portions 60a and 60b) of the driving portion 13a (13b). As a result, the lead interconnection 22 connected to the driving electrode 18 may also lead out, to an outside region (the edge portions 60a and 60b of the supporting portion 60), by extending over the top face 20a of the insulating layer 20, which is separated from the piezoelectric crystal 17, without contacting the top face 17a of the piezoelectric crystal 17 whereon the driving electrode 18 is formed. That is, in addition to the lead interconnection 21, a lead interconnection 22 may lead out similarly to an outer region further than the driving portion 13a (13b), so as to eliminate the need to perform wire bonding of the lead lines (outer interconnections) at a location in the vicinity of the driving portion 13a (13b). Consequently, this makes it possible, for example, to avoid reliably damage to the horizontal driving unit 10 (the driving portions 13a and 13b) that is caused by the wire bonding.

Moreover, according to one or more embodiments of the present invention, the insulating layer 20 may be formed so as to cover a region of a portion that includes the detecting electrode 19 on the top face 17a of the piezoelectric crystal 17. Given this, the insulating layer 20 may be formed on only that part of the entire surface (the top face 17a) of the piezoelectric crystal 17 whereon the detecting electrode 19 is formed, so that, to that extent, the stress of the insulating layer 20 does not greatly affect the flexural deformation of the piezoelectric crystal 17. This makes it possible, for example, to prevent effectively reduction in the deformation force of the piezoelectric crystal 17 that would be caused by stress in the insulating layer 20.

Moreover, according to one or more embodiments of the present invention, the detecting electrode 19 may have a long thin shape that extends in a specific direction (the Y direction), and the interconnection length (the total length) of the lead interconnection 21 may be longer than the length of the lengthwise direction (the Y direction) of the detecting electrode 19. In this way, even in a case of detecting the amount of deformation of the piezoelectric crystal 17 (the driving portions 13a and 13b) through the lead interconnection 21 that leads out across an interconnection distance greater (longer) than the length of the lengthwise direction of the detecting electrode 19 from the detecting electrode 19, the lead interconnection 21 may extend along the top face 20a of the insulating layer 20, which is separated from the piezoelectric crystal 17, making it possible to prevent the discharge of the surface charge, produced at that part of the detecting electrode 19, to the lead interconnection 21, which has a long interconnection length (a large interconnection surface area). Consequently, even when a lead interconnection 21 that has a long interconnection length is used, not only is it possible to detect easily the voltage value detected by the detecting electrode 19 part in a state wherein no extreme voltage drop occurs, but it is also possible to detect, with good accuracy, the amount of deformation of the piezoelectric crystal 17 (the driving portions 13a and 13b).

Moreover, one or more embodiments of the present invention may include a horizontal driving unit 10 for driving the mirror portion 1 around the axis 200, and vertical driving units 51 and 52, for driving the mirror portion 1 around the axis 300, which may be perpendicular to the axis 200. The lead interconnection 21 may be connected to the detecting electrode 19 of the horizontal driving unit 10 and may lead out from the detecting electrode 19 across the top face of the insulating layer 20 formed on top of the top face of the piezoelectric crystals 17 that may structure the vertical driving units 51 and 52, to lead out to the outside. With this structure, even when the lead interconnection 21 leads out to an outer region across the vertical driving units 51 and 52, an insulating layer 20 may be interposed between the lead interconnection 21 and the piezoelectric crystals 17 of the vertical driving units 51 and 52, making it possible, for example, to greatly prevent the discharge (diffusion) of the surface charge produced at the detecting electrode 19 part of the horizontal driving unit 10 into the lead interconnection 21, affected by the piezoelectric crystals (dielectrics) of the vertical driving units 51 and 52. Consequently, even in a vibrating mirror device 100 wherein a mirror portion 1 is caused to reciprocate around two axes (an axis 200 and an axis 300) by the horizontal driving unit 10 and the vertical driving units 51 and 52, it is possible to prevent effectively the detection, by the detecting electrode, of a voltage value in a state wherein a voltage drop has occurred due to discharge of the surface charge.

Moreover, according to one or more embodiments of the present invention, the application of the vibrating mirror device 100 to the portable projector 160 enables the driving of the vibrating mirror device 100 to be controlled by a controlling portion 120 such that the amounts of deformation of the piezoelectric crystals 17 are detected accurately, thus enabling projection, onto a display region, such as a screen, or the like, of a video in a state wherein the laser beam from the light source portion 130 is scanned with precision.

The embodiments disclosed herein should be considered to be illustrative, rather than constraining, in all points. The scope of the present invention is defined by the Scope of Patent Claims, rather than by the explanation of the embodiment set forth above, and also includes all meanings that are equivalent to those in the Scope of Patent Claims, and includes all modifications within said Scope.

For example, while an example of a structure of an insulating layer 20 that uses polyimide resin was set forth above, the present invention is not limited thereto. Moreover, insofar as the resin has a low dielectric constant and can undergo flexural deformation, the insulating layer 20 may be formed using, for example, urethane resin.

Moreover, while an example wherein the base portion 15 was structured from a Si substrate was set forth above, the present invention is not limited thereto. For example, the base portion 15 may instead be structured using a metal material, such as stainless steel.

Moreover, while an example wherein the detecting electrode 19 was structured using Pt or a Cr-Au alloy was set forth above, the present invention is not limited thereto. In the present invention the detecting electrode 19 may be structured using a metal material having conductivity such as, for example, Al, Cu, or Au, rather than the above.

Moreover, while an example wherein the lead interconnection 21 was structured using Pt or a Cr-Au alloy in the same manner as the detecting electrode 19 was set forth above, the present invention is not limited thereto. In the present invention the lead interconnection 21 may be structured using a metal material having conductivity such as, for example, Al, Cu, or Au, rather than the above.

Moreover, while an example wherein the piezoelectric crystal 17 is made from lead zirconium titanate (PZT) was set forth above, the present invention is not limited thereto. For example, rather than PZT, a piezoelectric material made from oxides having lead, titanium, and zirconium as the primary components thereof, or a piezoelectric material such as zinc oxide (ZnO), lanthanum lead zirconate titanate ((Pb, La) (Zr, Ti))O₃), potassium niobate (KNbO₃), sodium niobate (NaNbO₃), or the like, may be used to structure the piezoelectric crystal 17.

Moreover, while an example wherein a bottom electrode 16 that is disposed on the bottom face 17b of the piezoelectric crystal 17 is formed on essentially the entire face of the driving portion 13a (13b) and electrodes that are disposed on the top face 17a of the piezoelectric crystal 17 are divided into a driving electrode 18 and a detecting electrode 19 was set forth above, the present invention is not limited thereto. In the present invention, the electrode that is disposed on the top face 17a of the piezoelectric crystal 17 may be formed on essentially the entire surface of the driving portion 13a (13b), and electrodes that are disposed on the bottom face 17b of the piezoelectric crystal 17 may be divided into a driving electrode 18 and a detecting electrode 19.

Moreover, while an example of structuring the vibrating mirror device 100 so as to include a horizontal driving unit 10 and a vertical driving unit 51 (52), to scan the light in two dimensions (in the X-Y plane) was set forth above, the present invention is not limited thereto. In the present invention the structure may be of only the horizontal driving unit 10 without the vertical driving unit 51 (52), so that the vibrating mirror device is structured so as to scan the light in only one dimension. Furthermore, those of ordinary skill in the art would appreciate that certain "units" or "portions" of one or more embodiments of the present invention may be implemented by a circuit, processor, etc. using known methods.

### [Explanation of Reference Numerals]

1: Mirror Portion
10: Horizontal Driving Unit (First Driving Portion)
13a, 13b: Driving Portions (First Driving Portions)
17: Piezoelectric Crystal
17a: Top Face
18: Driving Electrode
19: Detecting Electrode
20: Insulating Layer
20a: Top Face
20b: Through Hole (Hole Portion)
21: Lead Interconnection (First Lead Interconnection, Lead Interconnection)
22: Lead Interconnection (Second Lead Interconnection, Lead Interconnection)
51, 52: Vertical Driving Units (Second Driving Portions)
51c, 52c: Driving Portions (Second Driving Portions)
60a, 60b: Edge Portions (Outer Regions)
100: Vibrating mirror device
120: Controlling Portion
131: Red LD Portion (Laser Beam Producing Portion)
132: Blue LD Portion (Laser Beam Producing Portion)
133: Green LD Portion (Laser Beam Producing Portion)
160: Portable Projector (Electronic Device with Projector Function)
200: Axis (First Axis)
300: Axis (Second Axis)

## Claims

1. A vibrating mirror device (100) comprising:
a mirror portion (1);
a driving portion (10) including a detecting electrode (19) configured to detect an amount
of deformation of a piezoelectric element (17) when driving the mirror portion (1) by applying a voltage to cause the piezoelectric element (17) to deform;
an insulating layer (20) formed on a top face (17a) of the piezoelectric element (17); and
a first lead interconnection (21) formed on the top face (20a) of the insulating layer (20),
configured to contact the detecting electrode (19), and extending to a region (60a, 60b) outside of the driving portion (10).

2. The vibrating mirror device (100) of claim 1, wherein:
the insulating layer (20) is formed so as to cover the detecting electrode (19) on the top
face (17a) of the piezoelectric element (17), and
the first lead interconnection (21) is connected to the detecting electrode (19) through a
hole portion (20b) that passes through the insulating layer (20), in a thickness direction, at a part that corresponds to the detecting electrode (19).

3. The vibrating mirror device (100) of claim 1 or claim 2, wherein:
the driving portion (10) is structured so as to undergo flexural deformation when driven,
and
the insulating layer (20) is made from a resin capable of undergoing flexural deformation.

4. The vibrating mirror device (100) of any of claims 1-3, wherein:
the driving portion (10) further includes a driving electrode (18), formed so as to contact
the top face (17a) of the piezoelectric element (17), for applying a voltage to cause the piezoelectric element (17) to undergo flexural deformation to drive the mirror portion (1), and
the vibrating mirror device (100) further comprises a second lead interconnection (22),
formed on the top face (20a) of the insulating layer (20), connected to the driving electrode (18) of the driving portion (10), and extending to a region (60a, 60b) outside of the driving portion (10).

5. The vibrating mirror device (100) of any of claims 1-4, wherein:
the insulating layer (20) is formed so as to cover a region of a portion that includes the
detecting electrode (19) on the top face (17a) of the piezoelectric element (17).

6. The vibrating mirror device (100) of any of claims 1-5, wherein:
the detecting electrode (19) has a long thin shape that extends in a first direction, and
an interconnection length of the first lead interconnection (21) is greater than a length of
the lengthwise direction of the detecting electrode (19).

7. The vibrating mirror device (100) of any of claims 1-6, wherein:
the driving portion (10) includes a first driving portion (13a, 13b) for causing the mirror
portion (1) to reciprocate around a first axis (200), and a second driving portion (51c, 52c) for causing the mirror portion (1) to reciprocate around a second axis (300) that is substantially perpendicular to the first axis (200),
the insulating layer (20) is formed on the top face (17a) of the piezoelectric element (17)
across the first driving portion (13a, 13b) and the second driving portion (51c, 52c), and
the first lead interconnection (21) leads out from the detecting electrode (19) of the first
driving portion (13a, 13b) and is routed sequentially over a top face (20a) of the insulating layer (20) corresponding to the first driving portion (13a, 13b) and a top face (20a) of the insulating layer (20) corresponding to the second driving portion (51c, 52c), so as to lead out to a region (60a, 60b) outside of the second driving portion (51c, 52c).

8. The vibrating mirror device (100) of any of claims 1-7, wherein:
the mirror portion (1) comprises a mirror; and
the driving portion (10) comprises a driving circuit.

9. An electronic device (160) having a projector function, comprising:
a laser beam producing portion (130, 131, 132, 133) configured to produce a laser beam;
a controlling portion (120) configured to analyze an inputted video to recognize pixel
information; and
a vibrating mirror device (100) of any of claims 1-8 configured to scan the laser beam.

10. The electronic device (160) of claim 9, wherein:
the laser beam producing portion (130, 131, 132, 133) comprises a laser source; and
the controlling portion (120) comprises a controlling circuit.
